(19) Europäisches Patentamt
European Patent Office
Office européen des brevets

(11) **EP 0 572 249 B1**

(12) **EUROPEAN PATENT SPECIFICATION**

(45) Date of publication and mention
of the grant of the patent:
**11.09.1996 Bulletin 1996/37**

(51) Int Cl.[6]: **G11B 5/127**, G11B 5/10,
G11B 5/147

(21) Application number: **93304111.3**

(22) Date of filing: **27.05.1993**

(54) **Laminated magnetic head and method for manufacturing thereof**

Laminierter Magnetkopf und Herstellungsverfahren dafür

Tête magnétique à couches multiples et procédé de fabrication

(84) Designated Contracting States:
**DE FR GB**

(30) Priority: **27.05.1992 JP 135144/92**

(43) Date of publication of application:
**01.12.1993 Bulletin 1993/48**

(73) Proprietor: **KABUSHIKI KAISHA TOSHIBA**
**Kawasaki-shi, Kanagawa-ken 210 (JP)**

(72) Inventor: **Ohmi, Kunio,**
**c/o Intellectual Property Division**
**Minato-ku, Tokyo (JP)**

(74) Representative:
**O'Connell, David Christopher et al**
**HASELTINE LAKE & CO.**
**Hazlitt House**
**28 Southampton Buildings**
**Chancery Lane**
**London WC2A 1AT (GB)**

(56) References cited:
**EP-A- 0 106 321**

- **PATENT ABSTRACTS OF JAPAN vol. 8, no. 245 (P-312) (1682) 10 November 1984 & JP-A-59 116 918 (MATSUSHITA DENKI SANGYO K.K.) 6 July 1984**
- **PATENT ABSTRACTS OF JAPAN vol. 10, no. 119 (P-453) 6 May 1986 & JP-A-60 247 813 (MITSUBISHI DENKI KK) 7 December 1985**
- **PATENT ABSTRACTS OF JAPAN vol. 11, no. 12 (P-535) 13 January 1987 & JP-A-61 188 708 (SANYO ELECTRIC CO LTD) 22 August 1986**
- **PATENT ABSTRACTS OF JAPAN vol. 8, no. 45 (P-257) (1482) 28 February 1984 & JP-A-58 196 617 (SANYO DENKI K.K.) 16 November 1983**
- **PATENT ABSTRACTS OF JAPAN vol. 8, no. 79 (P-267) (1516) 11 April 1984 & JP-A-58 222 427 (SANYO DENKI K.K.) 24 December 1983**

## Description

The present invention relates to a laminated magnetic head which is comprised of a substrate and a multilayer structure of magnetic film formed on the substrate by alternately laminating magnetic thin films and insulation films, more particularly, to a laminated magnetic head which is best suited for a recording/reproducing apparatus such as a high definition VTR, etc. which use high density recording media.

Recently, according to an increase in volume of information to be processed, magnetic recording/reproducing apparatus with a large storage capacity have appeared. In such a magnetic recording/reproducing apparatus a high density recording medium made of a magnetic body having a high coercive force Hc is used in order to increase the storage capacity of the apparatus.

As high density recording media have been put in practical use, improvement of the performance of magnetic head core bodies such as realization of high saturation flux density, high permeability in a high frequency band and so forth is strongly demanded. As magnetic heads to satisfy these demands, there are thin film laminated magnetic heads using alloy magnetic thin films comprising Fe-Al-Si alloy (commonly called Sendust) which have high saturation flux density.

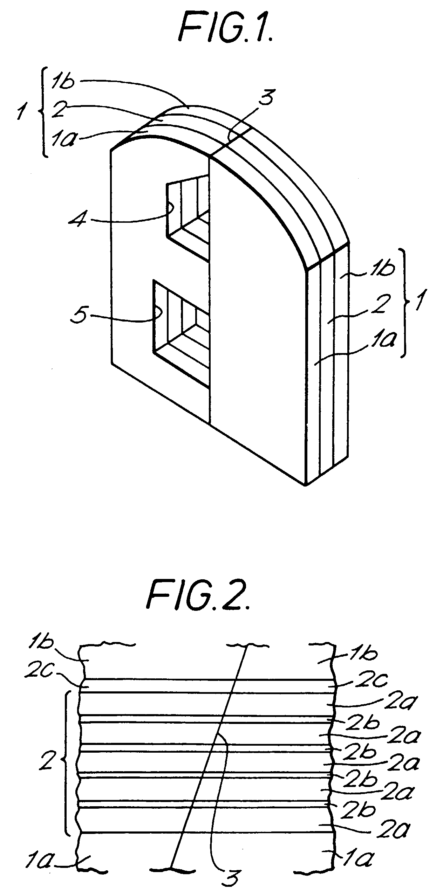

First, a conventional thin film laminated magnetic head will be explained with reference to the drawings. FIGURE 1 is a perspective view showing a conventional thin film laminated magnetic head and FIGURE 2 is a plan view showing an enlarged area around a gap of the thin film laminated head, as shown in FIGURE 1.

As shown in FIGURE 1, the thin film laminated head has a pair of head cores 1. Each of the head cores 1 is composed of a pair of non-magnetic substrates 1a and 1b which are united each other and a magnetic film 2 which is put between the substrates 1a and 1b.

On one of the head cores 1, there are a winding slot 4 and a glass body packed slot 5 which is used for uniting the head cores. Both of the head cores 1 are united with respective magnetic films 2 faced each other and a gap 3 is formed between both of the magnetic films 2.

The magnetic film 2 is composed of a multilayer film which is formed by laminating a magnetic thin film 2a and an insulation film 2b alternately, as shown in FIGURE 2. The magnetic thin film 2a is made of an alloy having high saturation flux density and the insulation film is made of silicon dioxide (SiO2). The magnetic film 2 is formed on the substrate 1a by such a thin film forming method as a sputtering, and the magnetic film 2 and the substrate 1b have been united with a glass film 2c. The magnetic film 2 has a thickness equal to a track width.

As a thin film laminated head is composed of a multilayer film comprising the magnetic thin film 2a and the insulation film 2b, a high writing magnetic field intensity is obtained, and further, the eddy current loss will become as less as that for the thickness (4-5 μm) of one

layer of the magnetic thin film 2a. As a result, a relatively high writing performance is obtained, and also a high permeability is obtained up to a relatively high frequency band, that is, a high reproduction performance is obtained. Further, as the substrates 1a and 1b are made of a non-magnetic body, generation of rubbing noise decreases and a low noise characteristic is obtained.

Retaining the above merits, the thin film laminated head is expected to be a magnetic head which is best suited for high density recording media.

However, since the film thickness of the magnetic film 2 defines the sectional area of the magnetic path, the sectional area of the magnetic path which is defined by the film thickness of the magnetic film 2 is small, and if frequency becomes higher than a prescribed numerical value, the reproduction performance decreases as the permeability decreases.

As a means to prevent the decrease of permeability, it may be considered better to make the thickness of the magnetic thin film 2a composing the magnetic film 2 thin. However, the thickness of the magnetic thin film 2a is limited to 4 - 5 μm at the present state because of deterioration of the initial layer, appearance of anisotropy and so forth. Therefore, on the magnetic film 2a of which thickness is limited, its permeability in the frequency band above 50 MHz decreases below 1/3 and the reproduction performance in this frequency band decreases sharply. So, the S/N ratio of a conventional thin film laminated head in a frequency band above 50 MHz will become smaller than the S/N ratio of a ferrite magnetic head even taking the low rubbing noise into consideration.

As described above, the S/N ratio of a conventional thin film head in a frequency band above 50 MHz becomes smaller than that of a ferrite magnetic head and it is difficult to improve the S/N ratio.

JP-A-59-116918 discloses a laminated magnetic head comprising a pair of head cores, each comprising a pair of substrates and a magnetic film placed between the pair of substrates, the head cores being joined such that the magnetic films of the two head cores face each other, with a magnetic gap therebetween, each of the substrates and the magnetic film defining a windings accommodation hole which passes through the magnetic head, wherein the magnetic film is comprised of magnetic thin films and insulation films alternately laminated with each other such that the magnetic film has a thickness corresponding to a prescribed track width on a recording medium.

EP-A-0106321 discloses an amorphous magnetic head which includes a main core having core halves each formed from non-laminated thin sheets of amorphous magnetic material, and a non-magnetic spacer, the core halves being abutted through the spacer, and the core halves defining a windings accommodation hole.

The present invention therefore seeks to provide a laminated magnetic head which is capable of improving such characteristics as an S/N ratio in a frequency band above 50 MHz and to provide its manufacturing method.

According to the first aspect of the present invention, there is provided a laminated magnetic head comprising a pair of head cores, each comprising a pair of substrates and a magnetic film placed between the pair of substrates, the head cores being joined such that the magnetic films of the two head cores face each other, with a magnetic gap therebetween, each of the substrates and the magnetic film defining a windings accommodation hole which passes through the magnetic head, wherein the magnetic film is comprised of magnetic thin films and insulation films alternately laminated with each other such that the magnetic film has a thickness corresponding to a prescribed track width on a recording medium;

and characterized in that at least one of the substrates has a composite structure, being made primarily of a non-magnetic material, but having a section immediately surrounding a part of the windings accommodation hole made from a magnetic material.

Thus, on the laminated magnetic head, at least one of the substrates is made of a composite body composed of the non-magnetic body and the magnetic body constructing the area near the slot for accommodating winding. In addition, as the area near the slot for accommodating winding of the substrates is composed of the magnetic body, the sectional area of the magnetic path is increased by the magnetic body more than that defined by the thickness of the magnetic film, and magnetic resistance decreases and a characteristic of the S/N ratio in a frequency band above 50 MHz can be improved. In particular, if the substrate portion on which the contacting surface with a recording medium is formed is constructed using a non-magnetic ceramic body, high abrasion resistance is obtained and further, if the area near the slot for accommodating winding on the substrates is constructed using a oxide magnetic body, excessive increase of inductance can be prevented and reproduction output per unit inductance can be increased.

According to a second aspect of the present invention, there is provided a method for manufacturing a laminated magnetic head comprising the steps of:

forming a base structure comprising a non-magnetic body, a magnetic body in contact with the non-magnetic body and a glass body covering the magnetic body by pouring melted glass on the magnetic body and the non-magnetic body;
cutting the base structure to form a composite substrate in which the magnetic body is placed between the non-magnetic body and the glass body;
forming a magnetic film on the composite substrate in a form of a multilayer film comprising magnetic thin films and insulation films alternately laminated with each other;
covering a glass film over the magnetic film;

forming a prescribed number of the composite substrates into a laminated block of the composite substrates by pressurized heating;
cutting from the laminated block a pair of wafers each having the magnetic film placed between the composite substrates from the laminated block;
defining a slot for accommodating windings in the magnetic body of at least one of the wafers, such that the magnetic body becomes a section of the wafer formed around a part of the slot for accommodating windings; and
uniting the pair of wafers into one body, such that the pair of wafers form respective head cores of the magnetic head, with the magnetic films of the pair of wafers facing each other, but leaving a magnetic gap between the magnetic films in the respective wafers.

Thus, in the method of manufacturing the laminated magnetic head, a laminated magnetic head having an area around the slot for accommodating winding of the substrates made of a magnetic body can be obtained easily by forming the composite substrates from the structure, a pair of wafers in which the magnetic films is placed between the composite substrates and the winding slot on one of the pair of wafers and then, by uniting the pair of wafers.

For a better understanding of the present invention and many of the attendant advantages thereof reference will now be made by way of example to the accompanying drawings, wherein:

FIGURE 1 is a perspective view showing a conventional thin film laminated head;
FIGURE 2 is a plan view showing an enlarged area around the gap of the thin film head shown in FIGURE 1;
FIGURE 3 is a perspective view showing one embodiment of the laminated magnetic head of the present invention;
FIGURE 4 is a plan view showing the enlarged area around the gap of the laminated magnetic head shown in FIGURE 3;
FIGURE 5 is a diagram showing the relationship between frequency and output increasing rate per unit inductance of the laminated magnetic head shown in FIGURE 3;
FIGURE 6 is a diagram for explaining the first process of the laminated magnetic head manufacturing method shown in FIGURE 3;
FIGURE 7 is a diagram for explaining the second process of the laminated magnetic head manufacturing method shown in FIGURE 3;
FIGURE 8 is a diagram for explaining the third process of the laminated magnetic head manufacturing method shown in FIGURE 3;
FIGURE 9 is a diagram for explaining the fourth process of the laminated magnetic head manufacturing method shown in FIGURE 3;

FIGURE 10 is a diagram for explaining the fifth process of the laminated magnetic head manufacturing method shown in FIGURE 3;

FIGURE 11 is a diagram for explaining the sixth process of the laminated magnetic head manufacturing method shown in FIGURE 3;

FIGURE 12 is a diagram for explaining the seventh process of the laminated magnetic head manufacturing method shown in FIGURE 3;

FIGURE 13 is a diagram for explaining the eighth process of the laminated magnetic head manufacturing method shown in FIGURE 3;

FIGURE 14 is a diagram for explaining the ninth process of the laminated magnetic head manufacturing method shown in FIGURE 3;

FIGURE 15 is a diagram for explaining the tenth process of the laminated magnetic head manufacturing method shown in FIGURE 3; and

FIGURE 16 is a diagram for explaining the eleventh process of the laminated magnetic head manufacturing method shown in FIGURE 3.

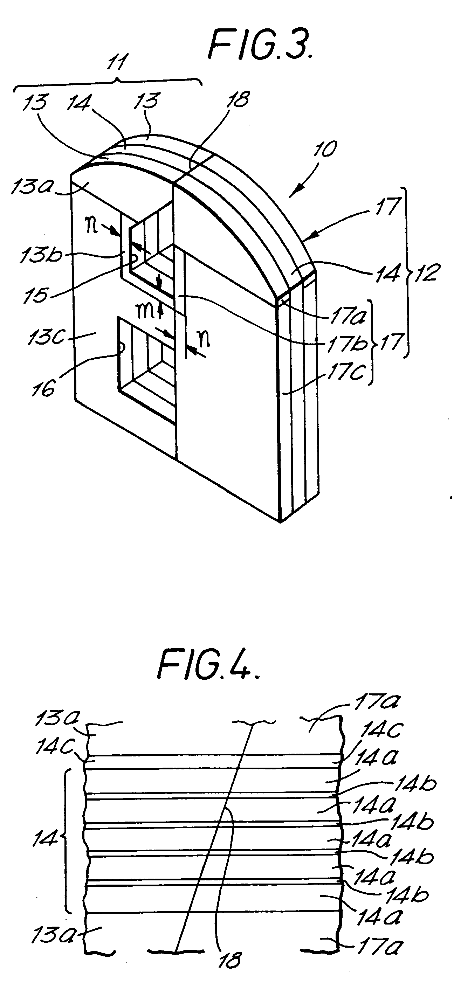

The present invention will be described in detail with reference to the FIGURES 3 through 16.

Referring now to FIGURE 3, an embodiment of the laminated magnetic head according to the present invention will be described in detail. FIGURE 3 is a perspective view showing one embodiment of the laminated magnetic head of the present invention and FIGURE 4 is a plan view showing the enlarged area around the gap of the laminated magnetic head, as shown in FIGURE 3.

A thin film laminated magnetic head 10 is provided with a pair of head cores 11 and 12, as shown in FIGURE 3. The head core 11 is composed of a pair of substrates 13 which are united each other and a magnetic film 14 placed between the substrates 13.

Each of the substrates 13 is composed of composite bodies; a non-magnetic ceramic body composing a non-magnetic body 13a, and oxide magnetic body composing a magnetic body 13b and a glass body composing a non-magnetic body 13c. The non-magnetic body 13a of each substrate 13 has the contacting surface for defining the contacting surface with a recording medium. On the area ranging from the non-magnetic body 13a to the magnetic body 13b of each substrate 13, a slot is provided to form a slot for providing a windings accommodation hole 15. On the non-magnetic body 13c of each substrate 13, another slot for providing a glass body packed hole 16 is provided. Sizes m and n for representing the plan area of the magnetic body 13b have been set at 100 μm, respectively.

Similarly to the head core 11, the other head core 12 is composed of a pair of substrates 17 which are united each other and a magnetic film 14 placed between the substrates 17. Each substrate 17 is composed of a composite body of a non-magnetic ceramic body composing a non-magnetic body 17a, an oxide magnetic body composing a magnetic body 17b and a glass body composing a non-magnetic body 17c. On the non-magnetic body 17a of each substrate 17, a contacting surface is provided for defining the contacting surface with a recording medium. The magnetic body 17b is arranged on the substrate 17 to oppose to a slot for providing a windings accommodation hole 15 on the substrate 13. Size n representing a plan area of the magnetic body 17b has been set at 100 μm.

The head cores 11 and 12 are united so that their magnetic films 14 face each other, and a gap 18 is formed between both magnetic films 14. The depth end of the gap 18 is placed on the non-magnetic body 13a.

Each magnetic film 14 is composed of a multilayer film which is formed with a magnetic thin film 14a and an insulation film 14b laminated alternately. The magnetic thin film 14a is composed of an alloy having high saturated magnetic density, while the insulation film 14b is composed of silicon dioxide (SiO2). The magnetic film 14 is formed on one of the pair of substrates 13 and 17, respectively according to a thin film forming method such as sputtering and united to the other one of the corresponding substrates 13 and 17 through a glass film 14c. The thickness of the magnetic film 14 is equal to the track width.

Next, the flow of magnetic flux during the reproducing operation by a laminated magnetic head will be explained.

Magnetic flux flowing in through the gap 18 is branched and flown to the magnetic film 14 and the magnetic bodies 13b and 17b after passing through the area near the depth of the magnetic film 14. Each branched magnetic flux flows around the windings accommodation hole 15, passes through the magnetic film at the area near the depth and returns to the gap 18. Therefore, as magnetic resistance decreases largely with the increase of the sectional area of the magnetic path by the magnetic bodies 13b and 17b, magnetic flux increases and reproduction output increases.

Further, inductance also increases at the same time when magnetic resistance decreases. As inductance is used as a standard in comparing performances of magnetic heads, it cannot be judged that reproduction output is improved unless increase in inductance is taken into consideration. So, the relationship between increase in inductance and reproduction output was examined and based on the result of this examination, it has been revealed that a ratio between reproduction output and an increasing rate of inductance is defined according to the shape and size of the magnetic bodies 13b and 17b.

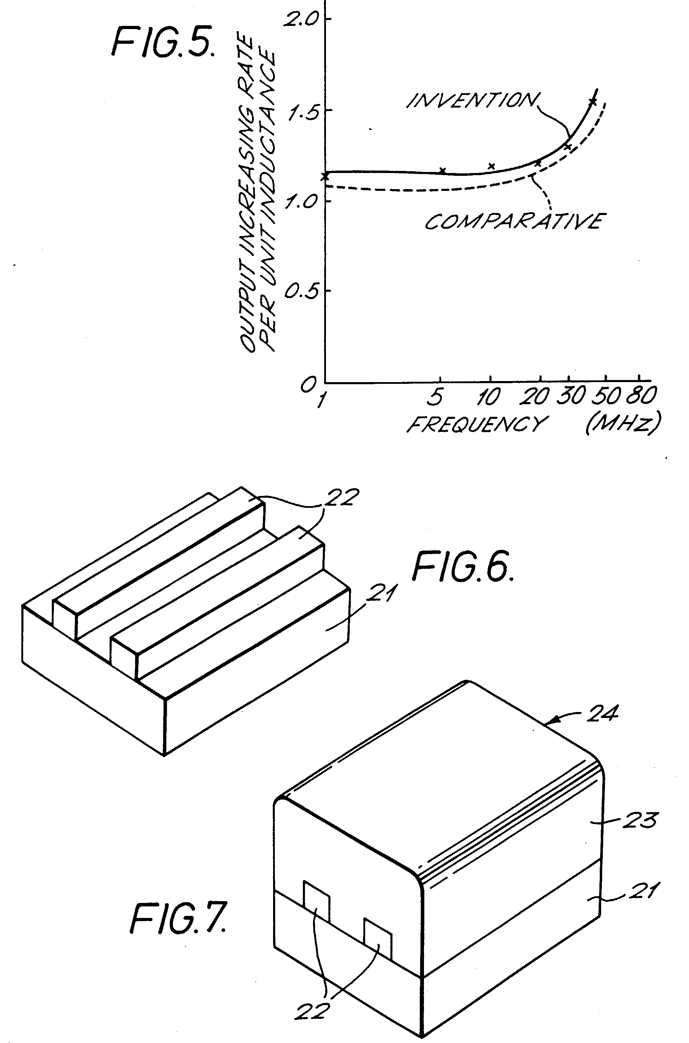

Next, the relationship between frequency and an increasing rate of output per unit inductance is shown in FIGURE 5.

FIGURE 5 is a diagram showing the relationship between frequency and the increasing rate of output per unit inductance in the laminated magnetic head shown in FIGURE 3. Further, as an example of comparison shown in FIGURE 5, a laminated magnetic head provided with substrates of which area ranging from the contacting surface with a recording medium to the area near the windings accommodation hole is made of a non-magnetic ceramic body and other areas are made of an oxide magnetic body is used.

As clear from the example of comparison shown in FIGURE 5, when the volume of the magnetic body becomes larger than a prescribed value, the magnetic body contributes to increase inductance rather than to improve reproduction output, and the output improving effect is reduced. This phenomenon is understood qualitatively from the tendency of magnetic flux to pass through the area near the windings accommodation hole during the reproduction of recorded data.

The increasing rate of reproduced output versus the increasing rate of inductance is obtained from the following equation.

$$\delta V_L = \delta V / (\sqrt{\delta L}) \qquad (1)$$

wherein $\delta V_L$ represents the output increasing rate per unit inductance, $\delta V$ represents the output increasing rate per unit winding, and $\delta L$ represents the inductance increasing rate per unit winding.

Further, in this embodiment, the maximum value of output per unit inductance is obtained by setting the sizes m and n of the magnetic body 13b at 100 μm, respectively and the size n of the magnetic body 17b at 100 μm.

Further, as the non-magnetic bodies 13a and 17a forming the contacting surface with a recording medium are made of non-magnetic ceramic body, generation of rubbing noise is nearly suppressed up to a higher frequency band and a high S/N ratio can be obtained.

In addition, a high writing magnetic field intensity can be obtained as the magnetic thin film 14a having high saturated magnetic density is used.

Further, the magnetic bodies 13b and 17b provided are able to stabilize fluctuation of reproduction characteristic which is attributable to the fluctuation of magnetic characteristic of the magnetic film 14 and it is possible to improve the yielding rate.

Next, the laminated magnetic head manufacturing method will be explained with reference to the drawings. FIGURE 6 through 14 are diagrams showing the manufacturing method of the magnetic heed, as shown in FIGURE 3 and they show the first through the eleventh processes.

First, a thick non-magnetic ceramic body 21 is prepared as shown in FIGURE 6. On one surface of the non-magnetic ceramic body 21, there is a pair of bar shape oxide magnetic bodies 22 placed in parallel with each other. Melted glass is poured from the above of the oxide magnetic bodies 22 of the non-magnetic ceramic body 21 and then, the cooling process is carried out to solidify the glass body.

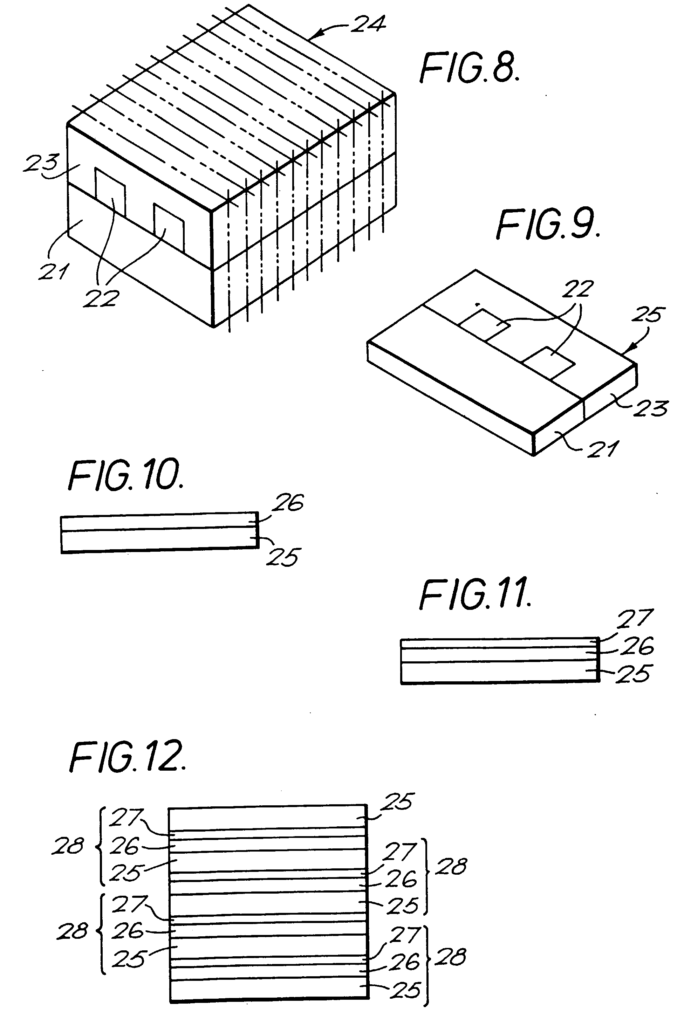

After the cooling process, a structure 24 is formed by placing the oxide magnetic body 22 in between the non-magnetic ceramic body 21 and a glass body 23, as shown in FIGURE 7. As shown in FIGURE 8, after forming the outer shape of the structure 24 to a rectangular prism shape by machining, the structure 24 is cut along the present cutting line (shown by the two-dot chain line in the figure).

After the cutting process, a plurality of composite substrates 25 in which the oxide magnetic body 22 is embedded between the non-magnetic ceramic body 21 and the glass body 23 is obtained, as shown in FIGURE 9.

As shown in FIGURE 10, a magnetic film 26 is formed on the surface of the composite substrate 25 by laminating a magnetic film (not shown) and an insulation film (not shown) alternately. After the magnetic film 26 is formed, a glass film 27 is formed on the surface of the magnetic film 26, as shown in FIGURE 11, and a substrate 28 with the magnetic film 26 and the glass film 27 formed on the composite substrate 25 is obtained.

After being formed, the substrates 28 are overlapped each other, as shown in FIGURE 12. The overlapped substrates 28 are heated and pressurized, and united in one unit when the glass film 27 is melted and solidified.

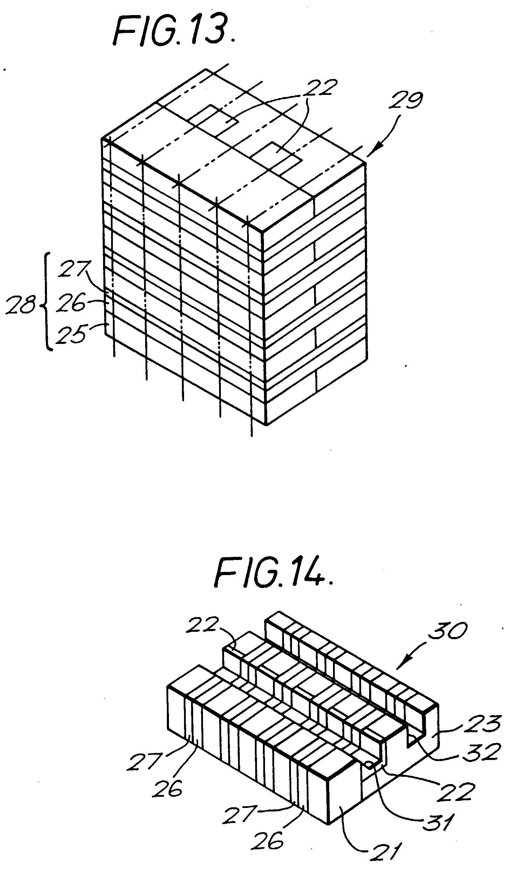

After the substrates 28 are united each other, a block 29 of the united substrates 28 is obtained, as shown in FIGURE 13. The block 29 is then cut along the cutting line (shown by the tow-dot chain line in FIGURE 13) which was preset so that the oxide magnetic body 22 is split into two sections. Further, of the wafers obtained by the cutting, a wafer having one of the split oxide magnetic bodies 22 and a wafer having the remaining split oxide magnetic body 22 are used as a pair.

On one of the paired wafers 30, two slots 31 and 32 are formed extending in the direction of thickness of the magnetic film 26. The slot 31 is arranged at the area composed of the oxide magnetic body 22 and the non-magnetic ceramic body 21. The slot 32 is arranged at the area composed of the glass body 23.

After forming the slots 31 and 32 on one of the paired wafers 30, a silicon dioxide film for a gap (not shown) is deposited on the surface on which the slots are formed.

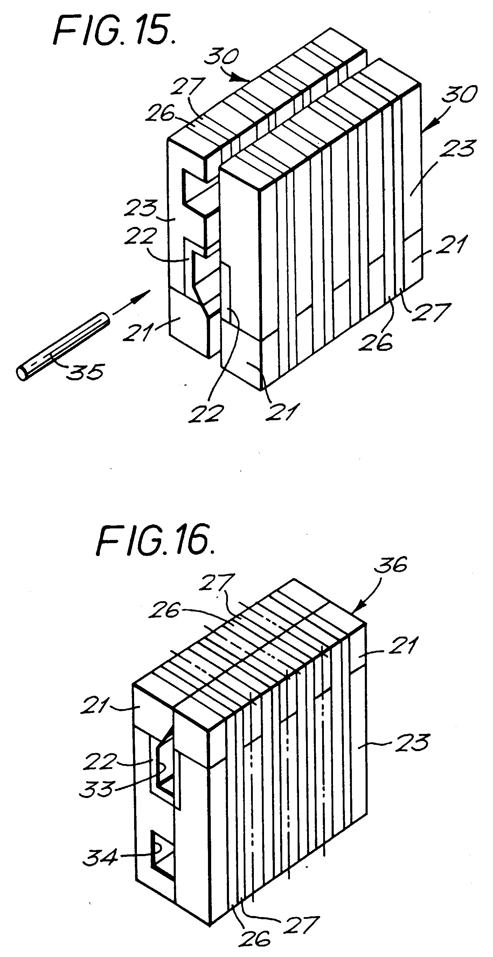

After the deposition of the gap film, one of the wafers 30 and the other wafer 30 are put in such a way that respective oxide magnetic bodies 22 are faced each other, as shown in FIGURES 15 and 16, and a windings accommodation hole 33 and a glass body packed hole 34 are formed. A low melting point bar glass body 35 is placed in the windings accommodation hole 33 and the glass body packed hole 34, respectively and by melting and solidifying the low melting point glass body 35, both of the wafers 30 are united into one body.

As shown in FIGURE 16, a united wafer 36 obtained through the uniting by the glass body is cut along the cutting line (shown by the two-dot chain line in FIGURE 16) which is in parallel with the magnetic film 26 and thus, a plurality of head bodies is obtained. After machining the head body, the laminated magnetic head 10 is obtained, as shown in FIGURE 3.

Thus, the laminated magnetic head 10 having such high characteristics as S/N ratio in a frequency band above 50 MHz can be obtained easily.

As described above, the laminated magnetic head of the present invention is capable of improving such characteristics as S/N ratio in a frequency band above 50 MHz.

When the substrate on which the contacting surface with a recording medium is formed is made by a non-magnetic ceramic body, high abrasion resistance is obtained and further, when the area around the windings accommodation hole on the substrate is made of an oxide magnetic body, reproduction output per unit inductance can be increased.

Further, according to the laminated magnetic head manufacturing method of the present invention, a laminated magnetic head having such high characteristics as S/N ratio in a frequency band above 50 MHz can be easily obtained.

**Claims**

1. A laminated magnetic head comprising a pair of head cores (11, 12), each comprising a pair of substrates (13) and a magnetic film (14) placed between the pair of substrates (13), the head cores being joined such that the magnetic films of the two head cores face each other, with a magnetic gap (18) therebetween, each of the substrates (13) and the magnetic film (14) defining a windings accommodation hole (15) which passes through the magnetic head;

   wherein the magnetic film (14) is comprised of magnetic thin films (14a) and insulation films (14b) alternately laminated with each other such that the magnetic film (14) has a thickness corresponding to a prescribed track width on a recording medium;

   and characterized in that at least one of the substrates has a composite structure, being made primarily of a non-magnetic material (13c), but having a section (13b) immediately surrounding a part of the windings accommodation hole (15) made from a magnetic material.

2. A laminated magnetic head as claimed in claim 1, wherein the substrate (13) includes a first part (13a) made from a ceramics material in a region which extends from a surface which contacts the recording medium to the windings accommodation hole; the section (13b) immediately surrounding a part of the windings accommodation hole, made from a magnetic oxide material (17b); and a third part (13c), made from glass.

3. A laminated magnetic head as claimed in claim 1, wherein a section (13b) of the substrate immediately surrounding a first part of the windings accommodation hole (15) remote from a surface of the head which contacts the recording medium is made from the magnetic material, while a section (13a) of the substrate adjacent a second part of the windings accommodation hole nearer the surface of the head which contacts the recording medium is made from the non-magnetic material.

4. A laminated magnetic head as claimed in claim 3, wherein the magnetic material extends a predetermined distance from the first part of the windings accommodation hole.

5. A laminated magnetic head as claimed in claim 4, wherein the predetermined distance is 100μm.

6. A method for manufacturing a laminated magnetic head comprising the steps of:

   forming a base structure comprising a non-magnetic body (21), a magnetic body (22) in contact with the non-magnetic body and a glass body (23) covering the magnetic body by pouring melted glass on the magnetic body and the non-magnetic body;
   cutting the base structure to form a composite substrate (25) in which the magnetic body is placed between the non-magnetic body and the glass body;
   forming a magnetic film (26) on the composite substrate (25) in a form of a multilayer film comprising magnetic thin films and insulation films alternately laminated with each other;
   covering a glass film (27) over the magnetic film;
   forming a prescribed number of the composite substrates into a laminated block (29) of the composite substrates by pressurized heating;
   cutting from the laminated block a pair of wafers (30) each having the magnetic film placed between the composite substrates from the laminated block;
   defining a slot (31) for accommodating windings in the magnetic body of at least one of the wafers, such that the magnetic body becomes a section of the wafer formed around a part of the slot for accommodating windings; and
   uniting the pair of wafers into one body, such that the pair of wafers form respective head cores of the magnetic head, with the magnetic films of the pair
   of wafers facing each other, but leaving a magnetic gap between the magnetic films in the respective wafers.

**Patentansprüche**

1. Geschichteter Magnetkopf, umfassend

ein Paar Kopfkerne (11, 12), die jeweils ein Substratpaar (13) und einen zwischen dem Substratpaar (13) angeordneten Magnetfilm (14) enthalten, wobei die Kopfkerne so verbunden sind, daß sich die Magnetfilme der beiden Kopfkerne mit einem Magnetspalt (18) dazwischen gegenüberstehen und jedes Substrat (13) und der Magnetfilm (14) ein Wicklungsaufnahmeloch (15) bestimmen, das durch den Magnetkopf verläuft, wobei der Magnetfilm (14) aus magnetischen Dünnfilmen (14a) und Isolierfilmen (14b) besteht, die wechselweise aufeinander geschichtet sind, so daß der Magnetfilm eine Dicke (14) hat, die einer vorgeschriebenen Spurbreite auf einem Aufzeichnungsmedium entspricht,

dadurch gekennzeichnet, daß zumindest eines der Substrate einen Verbundaufbau hat, der hauptsächlich aus nichtmagnetischem Material (13c) besteht, jedoch einen Abschnitt (13b) hat, der unmittelbar einen Teil des Wicklungsaufnahmelochs (15) umgibt und aus magnetischem Material besteht.

2. Geschichteter Magnetkopf nach Anspruch 1, wobei das Substrat (13) enthält:

einen ersten, aus Keramikmaterial hergestellten Teil (13a) in einem Bereich, der sich von einer Oberfläche, die das Aufzeichnungsmedium berührt, bis zum Wicklungsaufnahmeloch erstreckt;
den Abschnitt (13b), der unmittelbar einen Teil des Wicklungsaufnahmelochs umgibt und aus einem magnetischen Oxidmaterial (17b) besteht; und
einen dritten Teil (13c), der aus Glas besteht.

3. Geschichteter Magnetkopf nach Anspruch 1, wobei ein Abschnitt (13b) des Substrats, der unmittelbar einen ersten Teil des Wicklungsaufnahmelochs (15) umgibt, und zwar entfernt von einer Kopfoberfläche, die das Aufzeichnungsmedium berührt, aus dem Magnetmaterial besteht, wogegen ein Abschnitt (13a) des Substrats, der nahe an einem zweiten Teil des Wicklungsaufnahmelochs und näher an der Kopfoberfläche liegt, die das Aufzeichnungsmedium berührt, aus dem nichtmagnetischen Material besteht.

4. Geschichteter Magnetkopf nach Anspruch 3, wobei sich das Magnetmaterial einen vorbestimmten Abstand vom ersten Teil des Wicklungsaufnahmelochs weg erstreckt.

5. Geschichteter Magnetkopf nach Anspruch 4, wobei der vorbestimmte Abstand 100 µm beträgt.

6. Verfahren zum Herstellen eines geschichteten Magnetkopfs, umfassend die Schritte:

Ausbilden einer Grundstruktur, umfassend einen nichtmagnetischen Körper (21), einen magnetischen Körper (22), der den nichtmagnetischen Körper berührt, und einen Glaskörper (23), der den Magnetkörper bedeckt, indem geschmolzenes Glas auf den Magnetkörper und den nichtmagnetischen Körper gegossen wird;
Schneiden der Grundstruktur, um ein verbundenes Substrat (25) zu bilden, in dem der Magnetkörper zwischen dem nichtmagnetischen Körper und dem Glaskörper angeordnet ist;
Ausbilden eines Magnetfilms (26) auf dem Verbundsubstrat (25) in Form eines Mehrschichtfilms, der magnetische Dünnfilme und Isolierfilme enthält, die abwechselnd aufeinander geschichtet sind;
Bedecken des Magnetfilms mit einem Glasfilm (27); Ausbilden eines geschichteten Blocks (29) der Verbundsubstrate aus einer vorgeschriebenen Anzahl Verbundsubstrate durch Druck und Wärme;
Abschneiden eines Waferpaars (30) von dem geschichteten Block, wobei in jedem Wafer der Magnetfilm zwischen den Verbundsubstraten aus dem geschichteten Block angeordnet ist;
Bestimmen eines Schlitzes (31) zum Aufnehmen von Wicklungen im Magnetkörper zumindest eines der Wafer, so daß der Magnetkörper zu einem Abschnitt des Wafers wird, der um einen Teil des Schlitzes zum Aufnehmen von Wicklungen herum ausgebildet ist; und
Vereinigen des Waferpaars zu einem Körper, so daß das Waferpaar die jeweiligen Kopfkerne des Magnetkopfs bildet, wobei die Magnetfilme des Waferpaars einander gegenüberstehen, jedoch ein magnetischer Spalt zwischen den Magnetfilmen in den jeweiligen Wafern bleibt.

**Revendications**

1. Une tête magnétique stratifiée comprenant une paire de noyaux de tête (11, 12), comportant chacun une paire de substrats (13) et un film magnétique (14) placé entre la paire de substrats, les noyaux de tête étant reliés de manière telle que le film magnétique de deux noyaux de tête se font face mutuellement, avec un entrefer magnétique (18) entre eux, chacun des substrats (13) et le film magnétique (14) définissant un trou (15) de mise en place des enroulements qui passe à travers la tête magnétique,
dans laquelle le film magnétique (14) comprend une stratification de films minces magnétiques (14a) et de films isolants (14b) placés en alternance les uns avec les autres de sorte que le film magnétique (14) présente une épaisseur correspondant à une largeur de piste prescrite sur un support d'enregistrement ;
et caractérisée en ce qu'au moins l'un des substrats présente une structure composite, en étant réalisé principalement en une matière non magnétique (13c), mais présentant une section (13b) entourant immédiatement une partie du trou (15) de mise en place des enroulements, réalisée en une matière magnétique.

2. Une tête magnétique stratifiée telle que revendiquée à la revendication 1, dans laquelle le substrat (13) comprend une première partie (13a) réalisée en matière céramique dans une région qui s'étend depuis une surface en contact avec le support d'enregistrement jusqu'au trou de mise en place des enroulements ; la section (13b) entourant immédiatement une partie du trou de mise en place des enroulements, réalisée en une matière à base d'oxyde magnétique (17b) ; et une troisième partie (13c) réalisée en verre.

3. Une tête magnétique stratifiée telle que revendiquée à la revendication 1, dans laquelle une section (13b) du substrat entourant immédiatement une première partie du trou (15) de mise en place des enroulements, éloignée d'une surface de la tête qui vient en contact du support d'enregistrement est réalisée en une matière magnétique, tandis qu'une section (13a) du substrat adjacente à une seconde partie du trou de mise en place des enroulements plus proche de la surface de la tête qui vient au contact du support d'enregistrement est réalisée en une matière non magnétique.

4. Une tête magnétique stratifiée comme revendiquée à la revendication 3, dans laquelle la matière magnétique s'étend sur une distance prédéterminée depuis la première partie du trou de mise en place des enroulements.

5. Une tête magnétique stratifiée comme revendiquée à la revendication 4, dans laquelle la distance prédéterminée est de 100 µm.

6. Un procédé pour la fabrication d'une tête magnétique stratifiée comprenant les opérations de :

formation d'une structure de base comprenant un corps non magnétique (21), un corps magnétique (22) en contact avec le corps non magnétique et un corps en verre (23) recouvrant le corps magnétique en versant du verre fondu sur le corps magnétique et le corps non magnétique ;

découpe de la structure de base pour former un substrat composite (25) dans lequel le corps magnétique est placé entre le corps non magnétique et le corps en verre ;

formation d'un film magnétique (26) sur le substrat composite (25) sous forme d'un film multicouche comprenant une stratification de films minces magnétiques et de films isolants placés en alternance les uns avec les autres ;

recouvrement d'un film de verre (27) sur le film magnétique ;

formation d'un nombre prescrit des substrats composites dans un bloc stratifié (29) des substrats composites par chauffage sous pression ;

découpe, à partir du bloc stratifié d'une paire de pastilles (30), chacune présentant le film magnétique placé entre les substrats composites du bloc stratifié ;

définition d'une fente (31) pour la mise en place des enroulements dans le corps magnétique d'au moins une des pastilles, de sorte que le corps magnétique devient une section de la pastille formée autour d'une partie de la fente pour la mise en place des enroulements ; et

réunion de la paire de pastilles en un corps, de sorte que la paire de pastilles forme des noyaux de tête respectifs de la tête magnétique, avec les films magnétiques de la paire de pastilles se faisant face l'une à l'autre, mais laissant un entrefer magnétique entre les films magnétiques des pastilles respectives.

# FIG.1.

# FIG.2.

EP 0 572 249 B1

# FIG.3.

# FIG.4.

10

EP 0 572 249 B1

FIG.5.

FIG.6.

FIG.7.

11

*FIG.8.*

24

23

21

22

*FIG.9.*

22

25

23

21

*FIG.10.*

26

25

*FIG.11.*

27

26

25

*FIG.12.*

25

28 { 27
26
25

27
26 } 28
25

28 { 27
26
25

27
26 } 28
25

## FIG.13.

## FIG.14.

## FIG.15.

## FIG.16.